# EUROPEAN PATENT APPLICATION

(11) **EP 2 937 959 A2**
(43) Date of publication of application: **28.10.2015**
(21) Application number: 15000601.3
(22) Date of filing: 03.03.2015
(51) Int. Cl.: H02G 9/04

(54) **CABLE DUCT**

(30) Priority: 03.03.2014 NL 1040700
(71) Applicant: Heatpoint B.V., 2411 NM Bodegraven (NL)
(72) Inventor: Van Houten, Wolter, 2411 NM Bodegraven (NL)
(74) Representative: Ferguson, Alexander

(57) **Abstract**

Cable duct element for, with several cable duct elements, forming a cable duct for outdoor use, such as for railway wiring, comprising a trough member having a bottom and longitudinal sidewalls, characterised in that the trough member is made by injection moulding a thermoplastic polymer that is flame-extinguishing of its own accord, in particular polyamide, in particular polyamide 6, in particular new polyamide.

## Description

### BACKGROUND OF THE INVENTION

The invention relates to a cable duct for outdoor use, such as for railway and process plants, which duct is formed out of cable duct elements placed in series. The invention relates to a cable duct element for such a cable duct.

Such cable ducts are placed to pass lines through, in particular live cables and signalling cables, at railway tracks for operation and security of among others switches and signals and for power of among others aerial contact lines. They are situated along the actual track and extend over large distances. The cable duct elements comprise a trough member and a cover member fitting over it. The trough members can be partially or entirely accommodated in the ground, or be situated entirely above ground.

Known duct elements are usually made of a polypropene or polythene base material, which materials can easily be injection moulded, are cost-effective and strong. These materials are often used in the form of recycled material.

The duct elements need to meet several requirements, which requirements may differ per country and per user. The duct elements should for instance be loadable and UV-resistant. Another requirement regards its behaviour in case of fire: the material of which the trough member and cover member are made has to be flame-extinguishing.

Polypropene and polythene do not have this property of their own accord, for which reason an additive is required. The use of bromic and/or chloric additives is known, their drawback however is that in case of fire halogenic substances are released which is damaging to health and environment. Particular problems could arise in case of fire in tunnels and other relatively enclosed spaces. As an alternative there are also halogen-free flame-retardant and flame-extinguishing additives. However, these additives are expensive, and due to the relatively large portion required thereof, have a strength-reducing influence on the final product, which needs to be compensated by more of the base material. EP 1.398.789 suggests an injection-moulded trough made of a mixture of polypropene or polythene with as additive an anorganic material with calcium carbonate.

### SUMMARY OF THE INVENTION

It is an object of the invention to provide a cable duct that has been improved as regards one or more aspects.

It is an object of the invention to provide a cable duct and cable duct element for such a cable duct complying with the applicable standards, for which a relatively low quantity of base material is required.

It is an object of the invention to provide a cable duct and cable duct element for it of which the installation has been made easier.

It is an object of the invention to provide a cable duct and a cable duct element for it having advantageous properties in terms of logistics.

For achieving at least one of these objectives the invention, according to one aspect, provides a cable duct element for, with several cable duct elements, forming a cable duct for outdoor use, comprising a trough member having a bottom and longitudinal sidewalls, wherein the trough member is made by injection moulding a thermoplastic polymer that is flame-extinguishing of its own accord. As a result no additives to the base material, the thermoplastic polymer, are required for providing the trough member with flame-extinguishing properties. As a consequence the cable duct element will be less environmentally damaging. All material may contribute to the strength of the trough member, as a result of which less material will suffice than is usual with polythene or polypropene. In that way walls can be made thinner, as a result of which the width of the trough members can be smaller which is advantageous for storage and transport. Moreover the material of the cable duct element can be recycled better due to the unambiguous classification because the above-mentioned additives are not present in them.

A few polymers, in particular polyamide, more in particular polyamide 6, are eligible.

Comparable measures can be taken for a cover member for the trough member. Trough member and cover member can be made of the same material.

In view of promoting recycling, the trough member and/or the cover member are made of one type of thermoplastic polymer that is flame-extinguishing of its own accord.

Preferably new polymer is used so that a constant quality of material is guaranteed.

In case the cable duct element expands under the influence of moisture, which may in particular be the case with polyamide, in a further embodiment the trough member is provided with first and second longitudinal ends formed for a, -preferably at least substantially soil-tight-connection to second and first longitudinal ends of a respective identical further trough member of the cable duct, which connection allows a mutual axial shifting. In one embodiment thereof the first or the second longitudinal end is formed having an axially protruding, U-shaped collar having a flat wall, wherein the second or the first longitudinal end, respectively, in both longitudinal sidewalls and bottom preferably is formed having a U-shaped accommodation space extending axially inwardly from the longitudinal end in question, for fitting accommodation of the collar, wherein, preferably, the collar is in line with the inner surface of the trough member. This will largely counteract the penetration of soil particles into the duct.

In order to be able to place the cable duct elements easily while allowing for said expansion in longitudinal direction, in a further embodiment the first and second longitudinal ends are provided, respectively, with one or more abutment protrusions extending in axial outward direction, preferably integrally formed with the trough member, and with one or more abutment surfaces for them, wherein the abutment protrusion is elastically deformable or able to fail when a normal pressure force arising in situ (in use as cable duct, after placement) in the two consecutive trough members is exceeded. In that way it is ensured that a potential length equalisation is present in the trough member, also when consecutive trough members are placed tightly against each other. When placing a cable duct element against an already placed identical cable duct element the abutment protrusions of the one element can be made to abut the abutment surfaces of the other element. Then as well, placement can take place with known longitudinal measurements. Because the material and therefore what its behaviour under the influence of moisture will be, is known when designing and moulding, the pressure force at which the abutment protrusions need to deform (elastically) or to fail can be calculated and the protrusions can be designed in accordance therewith. Failing is considered an irreversible process, namely plastic deformation, including rupture. When exceeding said pressure force and the resulting plastic deformation or failing of the abutment protrusions, both cable duct elements are able to move relative to each other in longitudinal direction (towards each other) and thus enable expansion. In case of the collar, which as a result of the abutment of the abutment protrusions against the abutment surfaces only partially occupied the accommodation space, the collar can in that case slide relatively further into the accommodation space. Here the sand-tightness will not be compromised.

In a simple embodiment the abutment protrusion is a strip that is integrally formed with the trough member and parallel to the longitudinal axis of the trough member, preferably also extending parallel to the sidewall.

Placement is facilitated and alignment enhanced if in the first longitudinal end said abutment protrusions are provided at both longitudinal sidewalls and preferably also at the bottom. The abutment protrusions can be provided in an upper section of the sidewalls, preferably in the uppermost section thereof.

The sand-tightness is enhanced if the collar and the abutment protrusions are formed at the same longitudinal end, wherein the collar preferably protrudes beyond the abutment protrusions. The collar will then screen off the abutment protrusions inwardly, particularly during storage and transport. The abutment protrusions may have a length in duct direction exceeding ¼ length of the collar and exceeding 1/1 length of the collar. In one embodiment said length of the abutment protrusions exceeds ½ length of the collar and is smaller than and 1/1 length of the collar.

In order to counteract that sand present below the bottom could impede longitudinal expansion too much, axially outwardly and downwardly opening recesses may be arranged at the first and/or second longitudinal end, in the bottom and/or in the lowermost sections of the duct sidewalls. The recesses may be situated below said collar. They may be provided in one or more reinforcement baffles that are transverse to the longitudinal direction.

In a further development of the cable duct element according to the invention, the cover member is provided with first and second longitudinal ends formed for a, -preferably at least substantially soil-tight- connection to second and first longitudinal ends of an identical further cover member of the cable duct, which connection allows mutual axial shifting. In a simple embodiment the first longitudinal end comprises an axially protruding plate and the second longitudinal end comprises an accommodation space accommodating the plate.

In a further development of the cable duct element according to the invention the first and second longitudinal ends are provided with first and second coupling members, which form a dovetail joint that can be coupled in vertical direction, wherein preferably a snap connection is also provided that is active in vertical direction for securing both cable duct elements against mutual vertical displacement, wherein a mutual axial shifting of both cable duct elements over a determined and limited distance is possible, in case said abutment protrusions are present at least equalling the protruding length of the abutment protrusions, preferably larger than said length, preferably smaller than the length of the said collar if present.

In a further development of the cable duct element according to the invention it is provided with a cover member, wherein at the longitudinal edges the cover member is provided with hooks protruding downwardly and axially, preferably in the same axial direction, and in the sidewalls the trough member is provided with accommodation spaces for them, as known per se from Dutch Patent 2000773, wherein in this case at the longitudinal edges the cover member is provided with accommodation spaces for accommodating the hooks of a cover member of a further, identical cable duct element. As a result two covers can be joined together with the bottom sides abutting and despite the protruding hooks take up a joint thickness of two covers. In that way a stack of limited height can be made of pairs of cover members.

In one embodiment thereof the hooks at the one longitudinal edge are situated axially offset relative to the hooks at the other longitudinal edge, wherein the accommodation spaces in the one longitudinal edge are axially at the same level as the hooks at the other longitudinal edge. This goes for both longitudinal edges.

In another embodiment the hooks in the one longitudinal edge are situated at a distance to the one longitudinal end that equals the distance of the accommodation spaces in the same longitudinal edge to the other longitudinal end.

In their top surfaces the cover members can be provided with protrusions and accommodation spaces that are positioned for, in case of vertically aligned placement of two cover members, engaging into each other with the top surfaces. This enhances the stability of a stack of several pairs of covers placed with their bottom surfaces against each other.

At the longitudinal edges the cover member can be provided with placement cams and in the sidewalls the trough member can be provided with dedicated accommodation spaces, wherein the placement cams after being placed in the dedicated accommodation spaces are fixated therein in axial direction, wherein the hooks with the hook opening face away from the placement cams and with their vertical portion are spaced apart with axial play from the opposite edge of the accommodation space for the hook in question, so that the cover member is able to expand in a predetermined direction while preserving the hook engagement.

The cable duct element according to the invention can be made of a thermoplastic polymer that is free of flame-retardant and/or flame-extinguishing additives, in particular is halogen-free.

According to a further aspect, the invention provides cable duct built up from a series of cable duct elements according to the invention.

According to a further aspect, the invention provides a cable duct built up from a series of cable duct elements each comprising a trough member having a bottom and longitudinal sidewalls and a cover member, wherein the trough member has a bottom in which holes have been arranged, wherein a cable is accommodated in the cable duct which cable is held against the bottom by a U-shaped clamp which at it legs is provided with barbs which legs extend into the holes in the bottom. The barbs are capable of engaging onto the hole edges in an anchoring manner so that the clamp cannot be pulled back up. The legs of the clamps may each be provided with one or more pairs of barbs extending to both sides, wherein the legs preferably are each provided with several pairs of barbs that are spaced apart from each other in leg direction. The clamp can be attached in several ways, adjusted to the thickness of the cable.

The clamps cannot be removed without destruction, thus improving the security against cable theft. The clamps enhance the overview when laying several cables in the cable duct.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figure 1 shows an inclined view of an example of a cable duct element according to the invention having a trough member and a cover member;
Figures 2A-H show a top view and a bottom view (slightly smaller) of the trough member of the cable duct element of figure 1, two inclined side/end views of a longitudinal end of said trough member, two inclined side%nd views of the other longitudinal end of said trough member and two end views, respectively;
Figures 3A-D show inclined side views of the transitional area between two cable duct elements of figure 1, in placed condition and in expanded position, respectively;
Figures 4A-C show a bottom view of a cover member of the cable duct element of figure 1, an inclined bottom view on it and a joined pair of such cover members, respectively;
Figures 5A and 5B show a clamp for cables in a cable duct and a situation of their use, respectively.

### DETAILED DESCRIPTION OF THE DRAWINGS

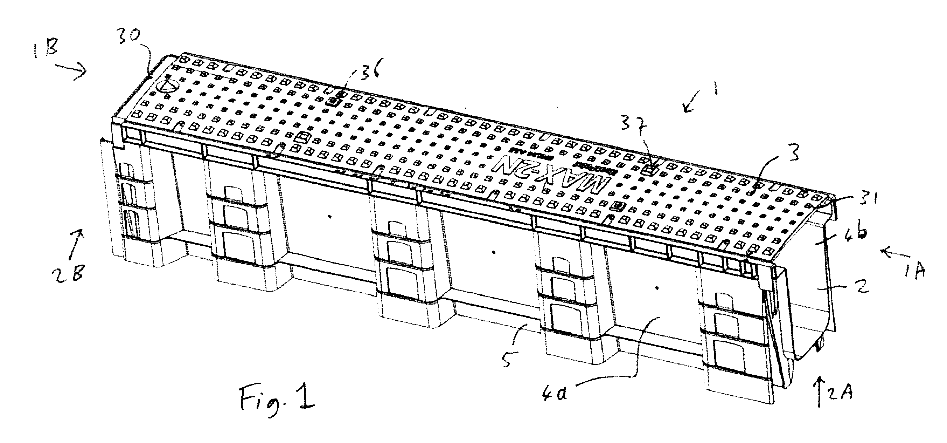

The cable duct element 1 in figure 1 comprises a trough member 2 and a cover member 3 and has a first longitudinal end 1A and a second longitudinal end 1B. The trough member 2 has two longitudinal sidewalls 4a,4b and a bottom 5, which together define a U-shape.

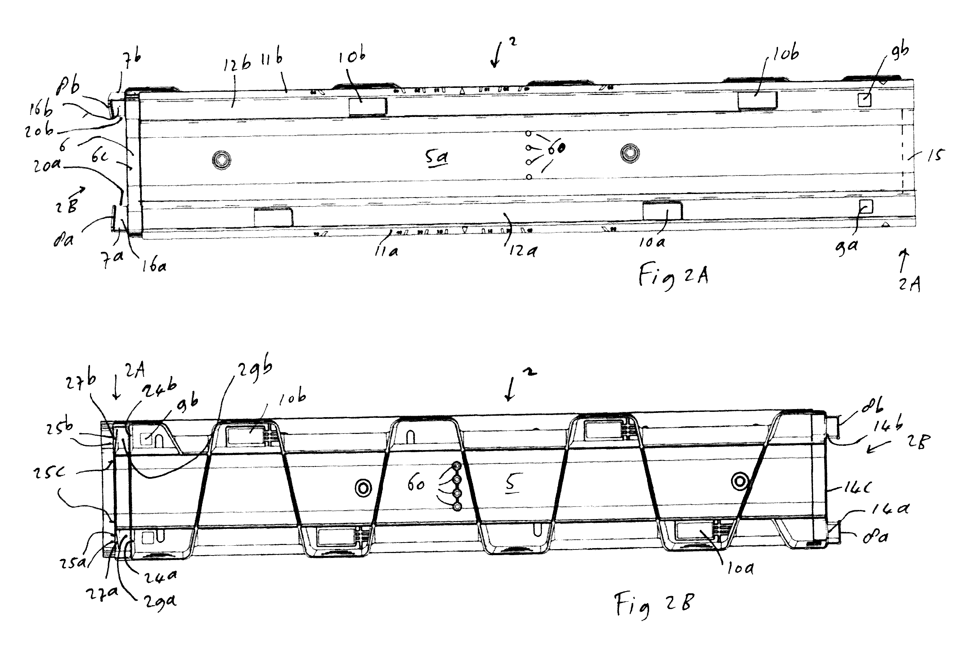

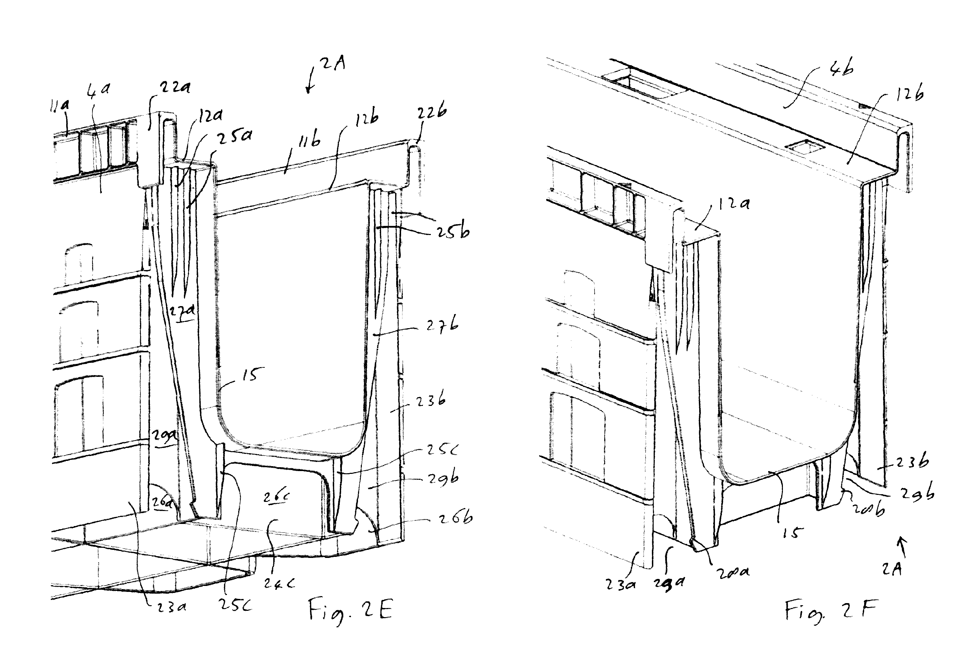

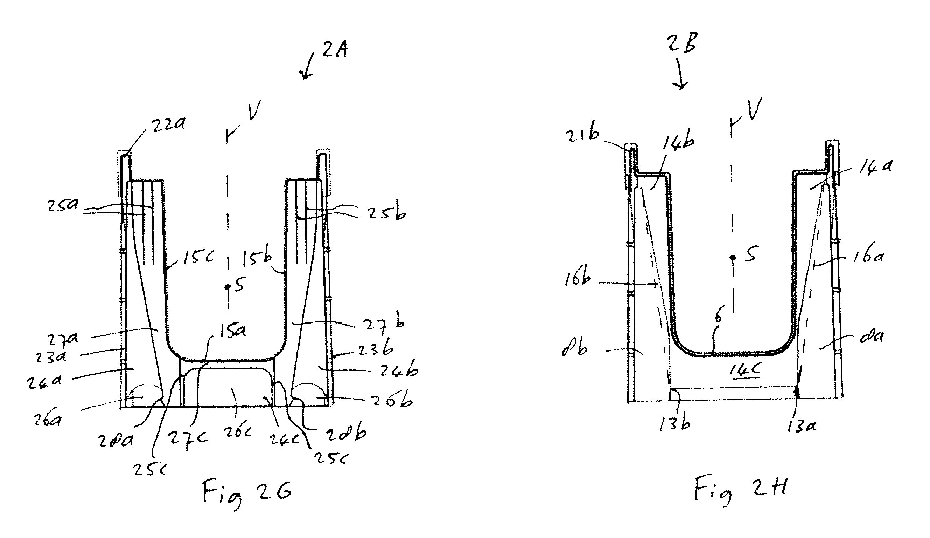

Referring to figures 2A-H, the trough member 2 is further discussed. The first longitudinal end 2A, see figures 2E, F and G, is provided with a U-shaped collar 15 protruding axially from the rest of the bottom 5 and longitudinal sidewalls 4a,b and forming a continuation of their inner surfaces, said collar having collar sidewalls 15a,b and a collar bottom 15c. At the exterior, the collar 15 is bounded in axial inward direction by vertical strips 27a,b that are transverse to the longitudinal axis S of the trough member, which strips are at axial distance from the end walls, 24a,b,c and are screened off to the side by vertical axial end strips 23a,b, so that each time a space 29a;29b that is screened off to the side and outward, is formed between end walls 24a;24b, end strips 23a;23b and strips 27a;27b. The strips 27a,b have outer edges converging relative to each other in downward direction, symmetrical relative to vertical centre line V, see figure 2G. Near their lower ends the strips 27a,b are provided with snap cams 28a,b. The strips 27a,b are connected to each other in transverse direction by strip 27c that is in one plane therewith. Provided on the strips 27a,b and strip 27c, are abutment elements protruding in axial direction, in this example baffles or flat ribs 25a-c, which in this example protrude to approximately halfway the collar 15, for instance approximately 7 mm with a 15 mm collar. In another embodiment they may protrude even further, to slightly shorter than the collar length, to for instance 12 mm. The flat ribs 25a-c have a thickness that is smaller than the one of the collar 15. At their upper end they may merge into, meaning they are attached to, the bottom side of longitudinal edges 12a,b, yet to be discussed, and the bottom side of the collar 15, for firmness. The baffles/ribs 25a-c have such strength that they do not deform/fail during the forces that arise during regular placement activities in the terrain, but do so indeed in case of forces to be discussed below arising as a result of longitudinal expansion of the trough members under the influence of moisture.

The strip 27c is U-shaped having a narrow horizontal band and leaves an axial opening 26c free that is open towards the bottom. At axial distance behind it there is a closed end wall or end baffle 24c. Similar openings 26a,b are provided on both sides of the opening 26c, in the lower end of the end walls 24a,b.

At the upper side of the sidewalls 4a,b the longitudinal end 2A is furthermore provided with flat accommodation spaces 22a,b.

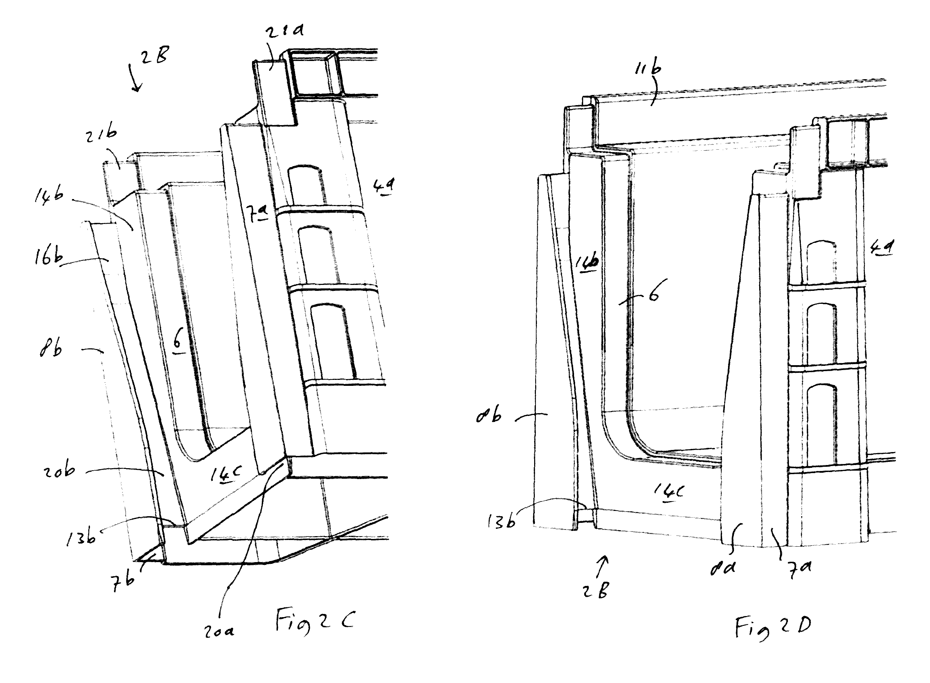

The second longitudinal end 2B, further to be seen in figures 2C,D and 2H is formed having a U-shaped recess 6 in the sidewalls 4a,b and bottom 5, the depth and axial length of which corresponds with that of collar 15. In axial outward direction the recess 6 merges into end walls 14a,b,c, which have a normal in axial direction (direction longitudinal axis S of the trough member). Outside of it, considered in axial direction, an accommodation space 20a;20b is formed, which in axial outward direction is bounded by vertical end baffles 8a,b, connected to the rest of the sidewalls 4a,b by side baffles 7a,b. The accommodation spaces 20a,b have an axial length corresponding to that of spaces 29a,b. As can be seen in figures 2A,D and 2H, side strips 16a,b are provided within the side baffles 7a,b, which strips converge in downward direction symmetrical relative to line V and are oriented parallel to the longitudinal axis S and bound the accommodation space 20a;20b sideward to the outside. The lower ends of the side baffles 16a,b end at a short distance from the lower side of the trough member 2 in order to define snap edges 13a,b. The axial length of the accommodation space 20 corresponds to the axial distance between the end walls 24a,b and strips 27a,b at the first longitudinal end 2A and in this example is approximately twice the axially protruding length of the breaking baffles, however in connection with sand-tightness slightly shorter than the length of the collar 15.

At the upper side of the sidewalls 4a,b the longitudinal end 2B is furthermore provided with flat protrusions 21a,b.

In figures 2A-H it can furthermore be seen that the upper edges of the sidewalls 4a,b are step-shaped, having entirely closed upright longitudinal edges 11 a,b and bearing edges 12a,b. The bearing edges 12a,b are provided with apertures 9a,b and 10a,b for placing the cover member 3.

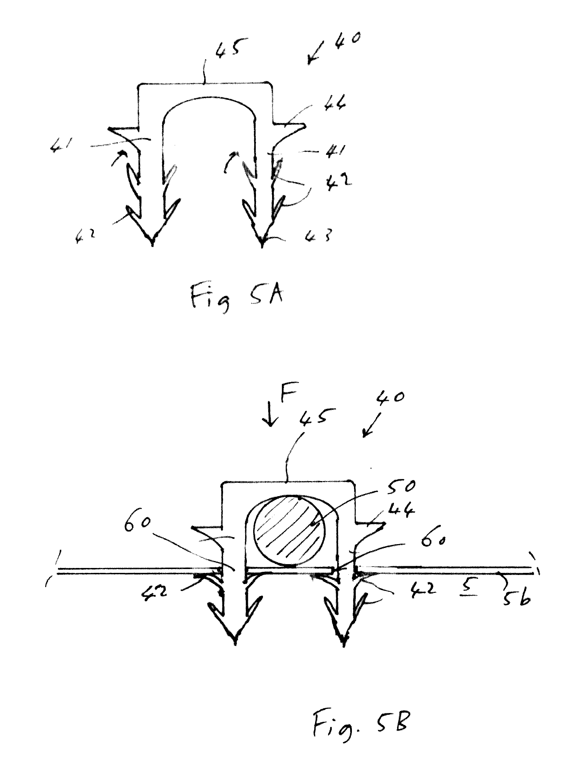

The bottom 5 of the trough member 2 is provided with a number of apertures 60, which are situated adjacently in transverse direction and can be used for placing clamps, such as of figure 5A, for securing cables to the top surface of the bottom 5. The apertures 60 may also have a drainage function.

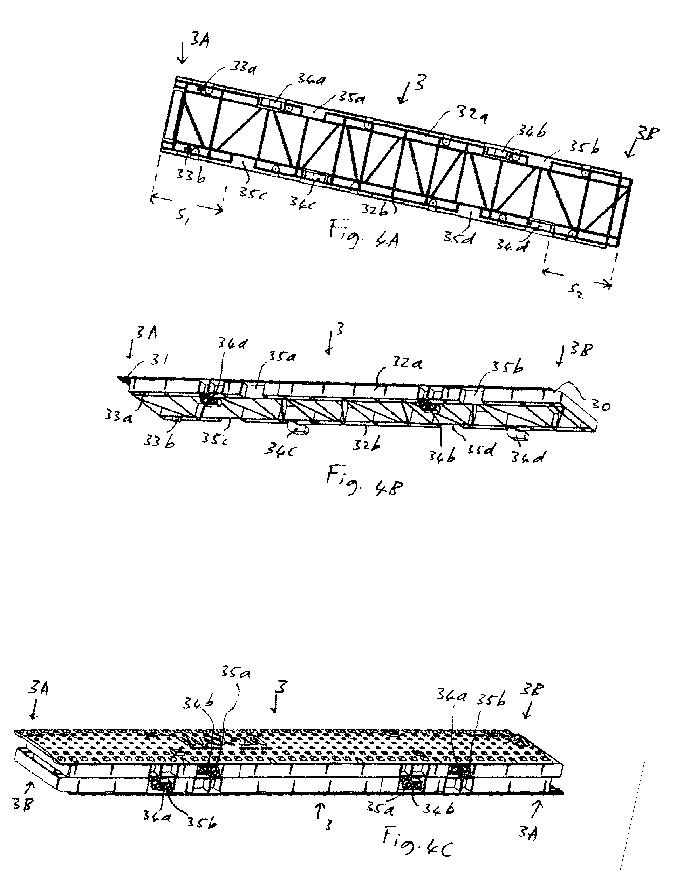

At the first longitudinal end 3A, the cover member 3, see figures 4A-C, is formed with an axially protruding strip 31 and at the second longitudinal end 3B is formed with a recess 30 that may offer room to strip 31 of another identical cover member 3. At the longitudinal edges 32a,b two pairs of hooks 34a,b;34c,d are formed, protruding downward and extending in the same axial direction, as well as cams 33a,b extending downward over a shorter length. The distances of the hooks 34a-d to a longitudinal end differ one from the other. Furthermore accommodation spaces 35a,b;35c,d opening downwards have been formed in the longitudinal edges 32a,b. The location of the accommodation spaces 35a,b;35c,d and the location of the hooks 34a,b;34c,d are adapted such to each other in longitudinal direction, that when placing two cover members 3 (figure 4C) against each other with the first longitudinal end of the one against the second longitudinal end of the other, the hooks 34a and 34b of the one will fit in the accommodation spaces 35b and 35a of the other, as well as the hooks 34c and 34d of the one fitting in the accommodation spaces 35d and 35c of the other. See for instance the indicated measures S1 and S2 that are equal to each other. The cams 33a,b are able to extend into the other open spaces in the longitudinal edges 32a,b. The result is a flat package that takes up little space during transport and storage (figure 4C). In an additional or alternative embodiment the hooks and the accommodation spaces are situated such that two cover members can be placed with their bottom sides against each other, their strips 31 being situated at the same joint longitudinal end.

At the top surface the cover members are provided with cams 36 and elevated cavities 37 (figure 1). When placing two cover members 3 against each other with their upper surfaces against each other, the cams 36 fall into the cavities 37, so that mutual horizontal displacement of either cover member is blocked. A stack of several pairs of cover members 3 placed with their bottom sides against each other, such as according to figure 4C, is thus stabilised.

The trough member 2 and the cover member 3 have each been integrally formed by injection moulding a thermoplastic polymer without adding additives for effecting flame-extinguishing effects, in particular free from halogens. The polymer may be polycarbonate, preferably a polyamide, in particular PA6. Due to the absence of additives for flame-extinguishing properties the walls can be designed thinner, as a result of which the exterior width can be smaller for a fixed interior width of the trough member, which saves on digging and also in the required storage- and transport space.

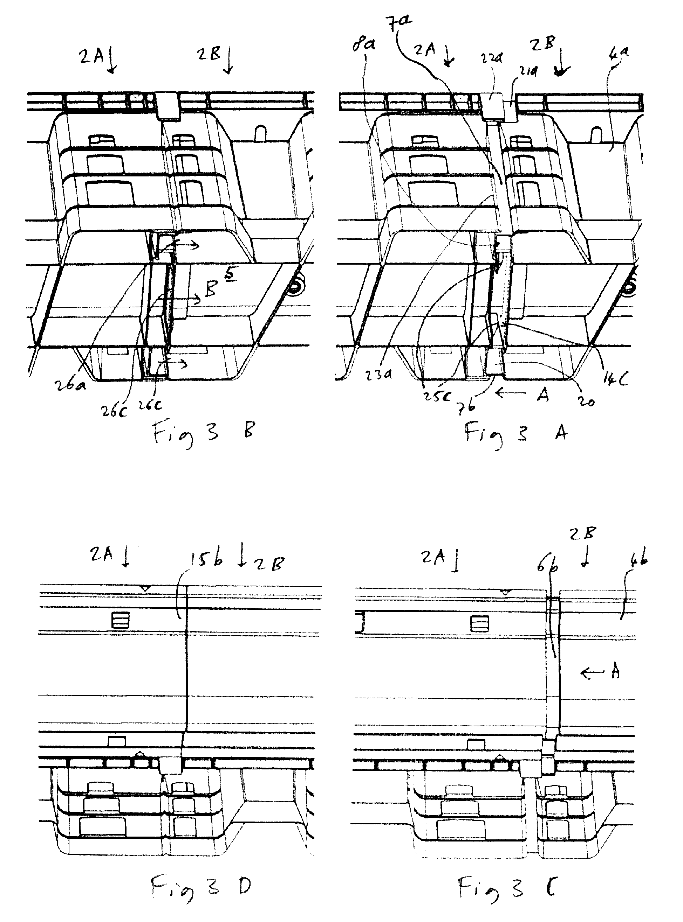

When placing a series of cable duct elements 1 first the trough members 2 are placed in a trench in the bottom of a terrain. The first trough member 2 will then sit with its longitudinal end 2B free. The first longitudinal end 2A of the next trough member 2 will be held over the second longitudinal end 2B and then moved downwards, so that the strips 27a,b end up in the accommodation spaces 20a,b and are moved downwards therein until the snap cams 28a,b have snapped below the snap edges 13a,b. The collar 15 will then sit fittingly in the recess 6 in directions transverse to the longitudinal axis S. The end baffles 8a,b will then extend into the spaces 29a,b between the end walls 24a,b and strips 27a,b. The recently placed trough member 2 can then be shifted towards the first trough member, until the baffles or ribs 25a-c abut the surfaces 14a-c. The collar 15 is still at axial distance from the edge of the recess 6. As the length of the trough member 2 between the baffles 25a-c and surfaces 14a-c is known, the cable duct can be laid in a dimensionally known manner. Alternatively it can be opted for to place the two consecutive trough members more loosely, wherein the possible axial distance is bounded by cooperation of strips 27a,b and end baffles 8a,b so that the duct coupling remains intact. Alternatively, in case the baffles or ribs 25a-c including the baffles 27a,b take up a slightly larger length, corresponding to the interior length of the accommodation spaces 20a,b, the coupling of two trough members can also be axially fitting and mutual axial play in the coupling practically absent. An assembly of two trough members will then be easy to handle prior to placement. Also see figures 3A and 3C. It can also be seen that the flat protrusions 21a,b fit in the flat accommodation spaces 22a,b and are able to slide axially in them.

Due to the optional stacking of cover members and the said possible smaller exterior width, storage and transport can take place efficiently. It should be considered here that the trough members may have a length of 1 m, having an exterior dimension of over 0.3 m and that there are projects requiring many kilometres of cable ducts to be placed.

After the trough members 2 have been placed and the cables have been laid in them, the cover members 3 can be placed, wherein each cover member is placed with the hooks 34a,b in the accommodation spaces 10a,b, and is subsequently shifted in hook direction in order to secure the hooks 34a,b in vertical direction. The cams 33a,b then end up in accommodation spaces 9a,b to secure the cover member 3 in axial direction. In a consecutive series the strips 31 are on/in the recesses 30, wherein axial shifting is possible. This is also made possible because after placement the vertical sections of the hooks 34a,b are situated at some distance from the edge of the accommodation space 10a,b in question.

For securing the cables to the bottom 5, use can be made of injection moulded synthetic clamps 40, see figures 5A,B that are U-shaped having legs 41, on which several pairs of bendable barbs 42 have been formed that extend to both sides. The web 45 connecting the legs 41 may be bendable. Finger supports 44 have been formed at the exterior of the legs 41. After the cables, such as cable 50, have been laid in the cable duct, they can be secured thereto by placing clamps 40 over the cable 50, and inserting them with pilot ends 43 into the dedicated apertures 60 in the bottom wall plate 5a, and subsequently pushing them downward to such an extent that the web 45 presses against the cable 50, at least substantially, and one of the or several pairs of barbs on each leg 41 have passed by the aperture 60 and press upwardly against the lower surface 5b. The clamps 40 ensure an easy and clear laying of cables and furthermore make unauthorised removal of cables more difficult.

When the length of the trough members 2 of a cable duct placed in the terrain expand under the influence of moisture, an undesired tension buildup in the cable duct may be prevented when the baffles or ribs 25a-c are at axial distance from the end walls 14a-c first over a first section until the baffles 25a-c abut the end walls 14a-c. In case of further expansion in duct direction the baffles, depending on the design, will be able to elastically deform or fail (plastic deformation or rupture) with which the ever present spare option of axial shifting is released and a further onward shifting of collar 15 in recess 6 is allowed. The baffles 27a,b then move axially through the spaces 20a,b and the end baffles 8a,b through the spaces 29a,b This spare option also becomes available when, while laying the cable duct, the baffles have already been laid against the end walls 14a-c.

If the baffles/ribs have been elastically deformed in said expansion process, the ducts will return to said previous condition, when shrinkage occurs later on, preserving the function of the baffles/ribs.

The soil-tightness is ensured immediately after placement and also after that. Soil below/in the bottom 5 will hardly impede the shifting motion, as the apertures 26a-c will then allow the soil escaping, also see figures 3B,D.

The above description is included to illustrate the operation of preferred embodiments of the invention and not to limit the scope of the invention. Starting from the above explanation many variations that fall within the spirit and scope of the present invention will be evident to an expert.

## Claims

1. Cable duct element for, with several cable duct elements, forming a cable duct for outdoor use, such as for railway wiring, comprising a trough member having a bottom and longitudinal sidewalls, **characterised in that** the trough member is made by injection moulding a thermoplastic polymer that is flame-extinguishing of its own accord.

2. Cable duct element according to claim 1 or according to the preamble of claim 1, comprising a cover member made of a thermoplastic polymer that is flame-extinguishing of its own accord.

3. Cable duct element according to claim 1 or 2, wherein the trough member and/or the cover member is made of polyamide, in particular polyamide 6.

4. Cable duct element according to claim 1, 2 or 3, made of one type of the thermoplastic polymer that is flame-extinguishing of its own accord.

5. Cable duct element according to any one of the preceding claims, made of new thermoplastic polymer.

6. Cable duct element according to any one of the preceding claims, made of a thermoplastic polymer that is free of flame-retardant and/or flame-extinguishing additives, is in particular halogen-free.

7. Cable duct element according to any one of the preceding claims, wherein the trough member is provided with first and second longitudinal ends formed for a connection to second and first longitudinal ends of a respective identical further trough member of the cable duct, which connection allows a mutual axial shifting, preferably in an at least substantially soil-tight manner, wherein, preferably, the first or the second longitudinal end is formed having an axially protruding, U-shaped collar having a flat wall, and the second or the first longitudinal end, respectively, in both longitudinal sidewalls and bottom is formed having a U-shaped accommodation space extending axially inwardly from the longitudinal end in question, for fitting accommodation of the collar, wherein, preferably, the collar is in line with the inner surface of the trough member.

8. Cable duct element according to claim 7, wherein the first and second longitudinal ends are provided, respectively, with one or more abutment protrusions extending in axial outward direction, and preferably integrally formed with the trough member, and with one or more abutment surfaces for them, wherein the abutment protrusion is elastically deformable or able to fail when a normal pressure force arising in situ (in use) in both consecutive trough members is exceeded, wherein, preferably, the abutment protrusion is a strip or rib that is integrally formed with the trough member and parallel to the longitudinal axis of the trough member, preferably also extending parallel to the sidewall, wherein, preferably, in the first longitudinal end said abutment protrusions are provided at both longitudinal sidewalls and preferably also at the bottom, wherein, preferably, abutment protrusions are provided in an upper section of the sidewalls, preferably in its uppermost section.

9. Cable duct element according to claim 8, when provided with said collar, wherein the collar and the abutment protrusions are formed at the same longitudinal end, wherein the collar protrudes beyond the abutment protrusions.

10. Cable duct element according to any one of the claims 7-9, wherein the trough member in the bottom, at the exterior, and/or in the lowermost sections of the trough sidewalls, is provided with one or more reinforcement baffles that are transverse to the longitudinal direction, wherein the reinforcement baffle situated at the first and/or second longitudinal end is provided with a recess, which opens axially outwardly and downwardly, wherein, when provided with said collar, the reinforcement baffle with the recess preferably is situated at the longitudinal end provided with the collar.

11. Cable duct element according to any one of the claims 7-10, wherein the cover member is provided with first and second longitudinal ends that are formed for an at least substantially soil-tight connection to second and first longitudinal ends of an identical further cover member of the cable duct, which soil-tight connection allows mutual axial shifting, wherein, preferably, the first longitudinal end comprises an axially protruding plate and the second longitudinal end comprises an accommodation space accommodating the plate.

12. Cable duct element according to any one of the claims 7-11, wherein the first and second longitudinal ends are provided with first and second coupling members, which form a dovetail joint that can be coupled in vertical direction, wherein preferably a snap connection is also provided that is active in vertical direction for securing both cable duct elements against mutual vertical displacement wherein the dovetail joint allows an axial shifting over a determined and limited distance, which at least equals the protruding length of the abutment protrusions, which preferably is larger than said length, preferably smaller than the length of the said collar if present.

13. Cable duct element according to any one of the preceding claims or according to the preamble of claim 1, having a cover member for the trough member, wherein at the longitudinal edges the cover member is provided with hooks protruding downwardly and axially, preferably in the same axial direction, and in the sidewalls the trough member is provided with accommodation spaces for them, **characterised in that**, at the longitudinal edges the cover member is provided with accommodation spaces for accommodating the hooks of a cover member of a further, identical cable duct element, wherein, preferably the hooks at the one longitudinal edge are situated axially offset relative to the hooks at the other longitudinal edge and/or wherein preferably the distances of the hooks to a longitudinal end differ.

14. Cable duct element according to claim 13, wherein the hooks in the one longitudinal edge are respectively situated at a distance to the one longitudinal end that equals the distance of the respective accommodation spaces in the same longitudinal edge to the other longitudinal end, and/or wherein the accommodation spaces in the one longitudinal edge are axially at the same level as the hooks at the other longitudinal edge.

15. Cable duct built up from a series of cable duct elements according to any one of the preceding claims.

16. Cable duct element according to claim 13 or 14, wherein in their top surfaces the cover members are provided with protrusions and accommodation spaces that are positioned for, in case of vertically aligned placement of two cover members, engaging into each other with the top surfaces.

17. Cable duct element according to claim 13, 14 or 16, or according to the preamble of claim 13, wherein at the longitudinal edges the cover member is provided with placement cams and in the sidewalls the trough member is provided with accommodation spaces for them, wherein the placement cams after being placed in the accommodation spaces are fixated therein in axial direction, wherein the hooks with the hook opening face away from the placement cams and with their vertical portion are spaced apart with axial play from the opposite edge of the accommodation space of the hook in question.

18. Cable duct built up from a series of cable duct elements each comprising a trough member having a bottom and longitudinal sidewalls and a cover member, wherein the trough member has a bottom in which holes have been arranged, wherein a cable is accommodated in the cable duct which cable is held against the bottom by a U-shaped clamp which at its legs is provided with barbs which legs extend into the holes in the bottom for anchoring.

19. Cable duct according to claim 18, wherein the legs of the clamps are each provided with pairs of barbs extending to both sides, wherein the legs preferably are each provided with several pairs of barbs that are spaced apart from each other in leg direction.

20. Cable duct element provided with one or more of the characterising measures described in the attached description and/or shown in the attached drawings.
